(19) Europäisches Patentamt
European Patent Office
Office européen des brevets

(11) **EP 4 733 799 A1**

(12) **EUROPEAN PATENT APPLICATION**

(43) Date of publication:
**29.04.2026 Bulletin 2026/18**

(21) Application number: **25210598.6**

(22) Date of filing: **23.10.2025**

(51) International Patent Classification (IPC):
**G01S 7/35** *(2006.01)*   **G01S 7/41** *(2006.01)*
**G01S 13/34** *(2006.01)*   **G01S 13/42** *(2006.01)*
**G01S 13/58** *(2006.01)*   **G01S 13/931** *(2020.01)*

(52) Cooperative Patent Classification (CPC):
**G01S 13/42; G01S 7/354; G01S 7/417;
G01S 13/34; G01S 13/584; G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.10.2024 DE 102024130825**

(71) Applicant: **Valeo Schalter und Sensoren GmbH
74321 Bietigheim-Bissingen (DE)**

(72) Inventors:
• **SADEGHPOUR, Ebrahim
96317 Kronach Neuses (DE)**
• **KUMAR, KUMAR
96317 Kronach Neuses (DE)**
• **POEPPERL, Maximilian
96317 Kronach Neuses (DE)**
• **SCHOLZ, Niko
96317 Kronach Neuses (DE)**
• **LUKIN, Artem
96317 Kronach Neuses (DE)**

(74) Representative: **Valeo Schalter und Sensoren
Valeo Schalte und Sensoren GmbH
Laiernstraße 12
74321 Bietigheim-Bissingen (DE)**

(54) **RADAR SYSTEM FOR DIFFERENTIATING OBJECTS BY MEANS OF A TRAINED NEURAL NETWORK FOR CORRECTING A 2D-ANGLE ESTIMATION OF THE OBJECTS ON THE BASIS OF PHASE INFORMATION GENERATED BY RANGE DOPPLER SPECTRA**

(57) Disclosed is Radar system (5) for differentiating objects (61, 62) in an environment (140) of a vehicle (40), the radar system (5) comprising an evaluation unit (4) with a trained first neural network (1), wherein the evaluation unit (4) is configured to:
- generate power spectra (10) dependent on receiving signals (110), the receiving signals (110) being generated by means of receiving antennas (11),
- select a pair of frequencies for each power spectrum, wherein each power spectrum comprises a phase information of the selected pair of frequencies of the respective power spectrum,
- perform an angle estimation of the objects (61, 62) with respect to the receiving antennas (11) dependent on the selected pairs of frequencies, a result of the angle estimation (800) indicating a differentiation between the objects (61, 62),
- generate an output (111) by means of the first neural network (1) dependent on the result of the angle estimation (800) and the phase information of the selected pairs of frequencies , the output (111) comprising a correction of the angle estimation of the objects (61, 62).

Fig. 1

EP 4 733 799 A1

## Description

### FIELD OF THE INVENTION

The invention relates to a radar system. Furthermore, the invention relates to a method for operating a radar system.

### BACKGROUND

DE 10 2020 201 025 A1 describes a radar sensor with several receiving antennas and several transmitting antennas arranged on a printed circuit board. A large proportion of the transmitting antennas are arranged at different positions with respect to a first axis and at the same position with respect to a second axis orthogonal to the first axis. A proportion of the receiving antennas are arranged at different positions with respect to the first axis and at the same position with respect to the second axis.

### SUMMARY OF THE INVENTION

It is an objective to provide an improved radar system for differentiating objects in an environment of a vehicle and an improved method for operating a radar system for detecting objects in an environment of a vehicle.

The objectives underlying the invention are solved by the features of the independent claims.

In one aspect a radar system for differentiating objects in an environment of a vehicle is disclosed. The radar system comprises an evaluation unit with a trained first neural network. The evaluation unit is configured to generate power spectra dependent on receiving signals. The receiving signals are generated by means of receiving antennas. First frequencies of each power spectrum relate to distances of the objects with respect to the receiving antennas. Second frequencies of each power spectrum relate to relative velocities of the objects with respect to the receiving antennas.

The evaluation unit is configured to select a pair of frequencies for each power spectrum. The pairs of frequencies of the power spectra each comprise the same frequency of the first frequencies and the same frequency of the second frequencies. Furthermore, each power spectrum comprises a phase information of the selected pair of frequencies of the respective power spectrum.

In addition, the evaluation unit is configured to perform an angle estimation of the objects with respect to the receiving antennas dependent on the selected pairs of frequencies. A result of the angle estimation indicates a differentiation between the objects.

Furthermore, the evaluation unit is configured to generate first input data. The first input data comprises the result of the angle estimation and the phase information of the selected pairs of frequencies.

Furthermore, the evaluation unit is configured to input the first input data into the first neural network and in response receive from the first neural network an output. The output comprises a correction of the angle estimation of the objects.

In another aspect a method for operating a radar system for differentiating objects in an environment of a vehicle is disclosed. The radar system comprises an evaluation unit with a trained first neural network. The method comprises:

- generating power spectra dependent on receiving signals, the receiving signals being generated by means of receiving antennas, wherein first frequencies of each power spectrum relate to distances of the objects with respect to the receiving antennas and second frequencies of each power spectrum relate to relative velocities of the objects with respect to the receiving antennas,

- selecting a pair of frequencies for each power spectrum, wherein the pairs of frequencies of the power spectra each comprise the same frequency of the first frequencies and the same frequency of the second frequencies, wherein each power spectrum comprises a phase information of the selected pair of frequencies of the respective power spectrum,

- performing an angle estimation of the objects with respect to the receiving antennas dependent on the selected pairs of frequencies, a result of the angle estimation indicating a differentiation between the objects,

- generating first input data, the first input data comprising the result of the angle estimation and the phase information of the selected pairs of frequencies,

- inputting the first input data into the first neural network and in response receive from the first neural network an output, the output comprising a correction of the angle estimation of the objects.

In another aspect a computer program is disclosed. The computer program comprises machine executable instructions for execution by a computational system, wherein execution of the machine executable instructions causes the computational system to perform the method for operating the radar system for differentiating the objects in the environment of the vehicle.

### BRIEF DESCRIPTION OF THE DRAWINGS

In the following, examples are described in greater detail making reference to the drawings in which:

Fig. 1 is a schematic of an a radar system comprising an evaluation unit with a first trained neural network,

Fig. 2 is a flow chart for describing a data flow within the evaluation unit shown in Fig. 1,

Fig. 3 depicts the radar system shown in Figure 1 with receiving antennas,

Fig. 4 depicts an exemplary range-Doppler power spectrum generated dependent on receiving signals generated by means of one of the receiving antennas shown in Figure 3,

Fig. 5 illustrates an application example of the radar system shown in Figure 1 in a traffic situation of a vehicle comprising two objects in an environment of the vehicle,

Fig. 6 shows an example of a result of an angle estimation by means of the evaluation unit for differentiating the objects shown in Figure 5,

Fig. 7 shows an example of an output of the first neural network shown in Figure 1 for differentiating the objects shown in Figure 5,

Fig. 8 depicts a dataflow for computing the result of an angle estimation shown in Figure 6 by means of a second neural network,

Fig. 9 shows a variant of the first neural network shown in Figure 1,

Fig. 10 depicts a dataflow describing a training of the first neural network shown in Figure 1.

## DETAILED DESCRIPTION

The result of the angle estimation may indicate an azimuth angle and an elevation angle of the respective object with respect to the radar system. In one example, the output comprising the correction of the angle estimation may indicate a corrected azimuth angle and a corrected elevation angle of the respective object with respect to the radar system. Alternatively, the output may provide correction values for the azimuth angle and the elevation angle of the respective object. In this case, the evaluation unit may compute the corrected azimuth angle dependent on the azimuth angle given by the result of the angle estimation and the correction value for the azimuth angle of the respective object. Similarly, the evaluation unit may compute the corrected elevation angle dependent on the elevation angle given by the result of the angle estimation and the correction value for the elevation angle of the respective object.

In one example, the result of the angle estimation may be in the form of a 2D spatial power spectrum, in particular in the form of a 2D-angle spectrum. In this case, each pair of angles may comprise one value of a first angle and one value of a second angle. The first angle may indicate the azimuth angle of subregions of the environment of the vehicle. The second angle may indicate the elevation angle of the subregions. The 2D-angle spectrum may assign intensity values or probability values to a respective pair of angles. Furthermore, to each pair of angles, one respective subregion of the subregions is associated. Generally, the higher the intensity or probability value of the respective pair of angles, the higher a probability may be that one of the objects is located in that subregion which is assigned to the respective pair of angles. Thus, the intensity values or probability values of the pairs of angles may allow to differentiate the objects with respect to their azimuth and elevation angle.

By using the phase information of the selected pairs of frequencies an additional information which may not be used for the angle estimation of the objects could be used in order to correct a result of the angle estimation. For correcting the result of the angle estimation the first neural network (NN) may be trained to reduce sidelobe effects of the result of the angle estimation. In one example, the first NN may be trained to reduce sidelobes of the 2D spatial power spectrum. During a training of the first NN, the first NN may learn correlations between main lobes and sidelobes of a training 2D power spectra. The training 2D power spectra may be used for differentiating training objects by means of an azimuth angle and an elevation angle of the training objects with respect to the radar system or a training radar system.

In one example, each power spectrum may comprise an intensity information of the selected pair of frequencies of the respective power spectrum. According to this example, the first input data may comprise the intensity information of the selected pairs of frequencies. The intensity information of the selected pairs of frequencies may be considered as an additional information beside the phase information of the selected pairs for performing the correction of the angle estimation. This may lead to a higher accuracy of the correction of the angle estimation.

In one example, the first input data may comprise a respective complex number. The respective complex number may represent the intensity information and the phase information of the respective selected pair of frequencies. With the first input data comprising the complex numbers, a coupling between the intensity information and the phase information of each pair of the selected frequencies may be preserved when the intensity and the phase information is processed by means of the first NN. This may enhance the accuracy of correction of the result of the angle estimation.

In one example, the evaluation unit may be configured to weight the phase information of the respective selected pair of frequencies using a respective complex weight. Alternatively or in addition, the evaluation unit may be configured to weight the intensity information of the respective selected pair of frequencies provided by the respective power spectrum using the respective weight. The complex weights may comprise a real part and an imaginary part. According to this example, the evaluation unit may be further configured to perform the angle estimation of the objects dependent on the weighted phase information and/or the weighted intensity information of the selected pairs of frequencies.

Using the complex weights could allow to perform the angle estimation with a higher accuracy. For example, using the complex weights could allow to accurately account for different phase shifts and amplitude variations caused by a spatial arrangement of antenna elements of the radar system. The antenna elements may comprise the receiving antennas and transmitting antennas together forming an antenna array. Reflected radar signals arriving from a particular direction at the antenna array may induce the different phase shifts at each receiving antenna. These phase shifts may depend on an arrival direction of the reflected radar signals and relative positions of the antenna elements to each other.

In one example, the evaluation unit may be configured to perform the Bartlett method for performing the angle estimation. In this example, the complex weights may represent weights of the Bartlett method.

An advantage of performing the angle estimation in the form of the Bartlett method may lie in its flexibility to adapt to different directions of arrival of the reflected radar signals, robustness to noise, and ability to adapt to different antenna array geometries, in particular in cases in which the antenna array is sparse. It may be beneficial in applications in which the antenna elements are irregularly arranged in the antenna array. In most applications, the antenna array may be sparse and the antenna elements may be arranged irregularly.

In some applications, the Bartlett method may be more efficient than a spatial Fast-Fourier transformation (FFT) because it may have less computational complexity than the FFT transformation. The Bartlett method may be used alternatively to the FFT for determining the azimuth and the elevation angle of the objects. Furthermore, the result of the angle estimation performed by means of the Bartlett method may be easier to interpret. In addition, the Bartlett method may be directly customized to meet specific needs, such as by choosing different weighting strategies or adapting to the antenna array geometry. The results of the angle estimation using the Bartlett method may be in the form the 2D spatial power spectrum, in one example in the form of the 2D-angle spectrum. The 2D spatial power spectrum may be directly interpretable as a signal strength depending on the direction of arrival of the reflected radar signals. The direction of arrival may be specified by the azimuth angle and the elevation angle with respect to the radar system.

In one example, the evaluation unit may comprise a third trained neural network. The third neural network may be configured to determine the complex weights dependent on an information about a configuration of an antenna array comprising the receiving antennas. The information about the configuration of the antenna array may comprise relative position between the antenna elements to each other. In one example, the information about the configuration of the antenna array may comprise information about a state of the respective antenna element. For example, in case one or more antenna elements are out of order, such an information may be provided by the information about the configuration of the antenna array as a broken antenna element may change the configuration of the antenna array. In one example, the third NN may be considered as a retrofit kit for the radar system. This may be useful in case the radar system comprises an adaptable antenna array structure or in case one of the antenna elements breaks. In case one of the antenna elements breaks, the third NN may be used to recalculate the complex weights based on an updated information about the configuration of the antenna array.

In one example, the evaluation unit may comprise a second neural network. The complex weights may be designed in the form of connection weights between neurons of several hidden layers of the second neural network. The second neural network may be configured to perform the angle estimation dependent on the selected pairs of frequencies and the connection weights.

When performing the angle estimation using the second NN, the several hidden layers could enable to recognize more complex patterns in the information provided by the selected pairs of frequencies for differentiating the objects compared to performing the angle estimation using the Bartlett method. Thus, the result of the angle estimation could be more accurate in case it is performed using the second NN. As the connection weights between the neurons are the complex weights it might be possible that a coupled information given by the intensity information and the phase information of the respective pair of the selected frequencies may be propagated through the second NN. Such a coupling may be preserved using the complex connection weights. That may enhance the accuracy of the result of the angle estimation.

In one example, the evaluation unit may be configured to generate second input data. The second input data may comprise the respective complex number for the selected pairs of frequencies. The respective complex number may represent the intensity information and the phase information of the respective selected pair of frequencies. The second neural network may be designed to perform the angle estimation dependent on the second input data.

In case the second input data comprises the complex numbers, the coupling between the intensity information and the phase information of each pair of the selected frequencies may be provided to the second NN in a direct manner. This may further enhance the accuracy of the angle estimation.

Generally, the intensity information and the phase information of each pair of the selected frequencies may be provided separately from each other to the second NN, i.e. not in the form of the complex numbers. In this case, a correlation between the intensity information and the phase information of each pair of the selected frequencies may be weighted less. However, the second NN may be more sensitive to correlations between phase information provided by several pairs of the selected pairs of frequencies in case the intensity information and the phase information of each pair of the selected frequencies may be provided separately from each other to the second NN, i.e. not in form of the complex numbers. In some applications, this may enhance the accuracy of the angle estimation.

The radar system may comprise a control unit for controlling the transmitting antennas to send radar signals dependent on control signals. The respective transmitting antenna may send the respective radar signal dependent on the respective control signal. In one example, the control signals may differ from each other, for example with respect to their phase.

The radar system may comprise the receiving antennas. The respective receiving antenna may be configured to generate a respective receiving signal of the receiving signals in response to receiving the reflected radar signals. The above mentioned reflected radar signals may result from reflections of the sent radar signals at the objects. In one example, the respective reflected radar signal may result from reflections of the radar signals at the respective object.

The control unit may be arranged to operate the transmitting antennas and the receiving antennas in a MIMO-mode (Multiple Input/Multiple Output mode). An operation of the transmitting antennas and the receiving antennas in the MIMO-mode may involve that each receiving antenna receives the reflected radar signals and that the reflected radar signals may be distinguishable by the evaluation unit. To realize this, the control unit may be designed to generate the control signals as coded signals. The control unit may be configured to perform a time-division multiplex method and/or using a binary phase modulation for coding the control signals and by that the radar signals. The coding may enable the evaluation unit to distinguish the different receiving signals from each other and by that the reflected radar signals from each other when processing the receiving signals.

The MIMO method may be used to generate a virtual antenna array with virtual receiving antennas, also referred to as virtual channels in the following. Distances between the virtual receiving antennas within the virtual antenna array may be obtained by performing a convolution of relative distances between the transmitting antennas and the receiving antennas.

In one example, the radar system may comprise mixing modules. The mixing modules may be arranged to mix each control signal with each receiving signal in order to produce mixed signals within an operating time interval. The mixing modules may be generally described as IQ-Demodulators which may be realized in analogue or digital form.

The control unit may be configured to generate the control signals such that the control signals comprise several chirps within the operating time interval. During a respective chirp a frequency of the respective control signal may increase and start from a starting frequency in each chirp such that the radar system may be operated in the form of an FMCW-radar.

The evaluation unit may be configured to generate the respective power spectrum dependent on the respective mixed signal. The respective power spectrum may also be referred to as respective spectrum in the following. The evaluation unit may be configured to generate the respective spectrum by performing a Fourier transform, in one example a fast Fourier transform (FFT), of the respective mixed signal.

The evaluation unit may be configured to generate the respective spectrum in the form of a 2-dimensional power spectrum. A first dimension of the respective spectrum may represent the first frequencies of the respective spectrum which relate to the distances of the objects mentioned above. A second dimension of the respective spectrum may represent the second frequencies which relate to the relative velocities of the objects mentioned above. The respective spectrum may be considered as a respective range-Doppler-spectrum. Each pair of one of the first frequencies and one of the second frequencies of the respective spectrum may be considered as a respective range-Doppler pair of the respective spectrum. The respective spectrum may associate a respective power or intensity value and a phase information to each range-Doppler pair of the respective spectrum.

In one example, the respective spectrum may provide the intensity information and the phase information of the respective selected pair of frequencies in the form of the above mentioned respective complex number. The result of the spatial Fourier transform may comprise the respective complex number which is assigned to the respective selected pair of frequencies. The respective complex number may comprise a real part and an imaginary part. In one example, the evaluation unit may be configured to compute the intensity information and the phase information of the respective selected pair of frequencies dependent on the real part and the imaginary part of the complex number of the respective selected pair of frequencies. In this case, the intensity information and the phase information of the respective selected pair of frequencies may be provided indirectly by means of the complex number which is assigned to the respective selected pair of frequencies in the result of the spatial Fourier transform.

In another example, the phase information of the respective selected pair of frequencies may be equal to the imaginary part of the complex number of the respective selected pair of frequencies. In this case, the imaginary part is assumed to provide the phase information together with the intensity information of the respective selected pair of frequencies in an indirect manner. In one example, the intensity information and the phase information of the respective selected pair of frequencies may be provided indirectly by means of the real part and the imaginary part of the complex number of the respective selected pair of frequencies. In another example, the evaluation unit may be configured to compute the intensity information of the respective selected pair of frequencies dependent on the real part and the imaginary part of the complex number of the respective selected pair of frequencies.

The phase information of the respective range-Doppler pair of the respective spectrum may relate a phase of a frequency of the respective control signal dependent on which the respective mixed signal is generated to a phase of the frequencies of the respective range-Doppler pair. More precisely, the phase information of the respective range-Doppler pair of the respective spectrum may indicate a respective phase shift between the frequency of the respective control signal dependent on which the respective mixed signal is generated and the phase of the frequencies of the respective range-Doppler pair.

Though the receiving antennas are spatially separated from each other it is assumed that a respective distance of the respective object with respect to the respective receiving antenna is equal. This is due to the fact that the distances of the objects with respect to the receiving antennas is much greater than the spacing between the receiving antennas. The same may apply to the relative velocities of the objects. The relative velocities of the objects with respect to the respective receiving antenna may be equal. Hence the power spectra may be similar or equal to each other except for the phase information of the respective range-Doppler pair of the respective spectrum.

The above mentioned selecting of the pair of frequencies for each spectrum may comprise selecting one range-Doppler pair of a selected spectrum of the spectra, in the following referred to as the selected range-Doppler pair. In one example, the selected spectrum may be selected randomly.

In one example, the evaluation unit may be configured to determine the selected range-Doppler pair as the range-Doppler pair of the selected spectrum that comprises the highest power value or intensity value. The evaluation unit may be arranged to search the selected range-Doppler pair and find the selected range-Doppler pair, taking into account a prescribed tolerance, in each spectrum. This may be due to the fact that the selected range Doppler pair may be selected with respect to the power values or intensity values of the range Doppler pairs and that the spectra may be similar or equal among each other except for the phase information of the range-Doppler pairs.

Thus, the respective spectrum may comprise the selected range-Doppler pair, taking into account the prescribed tolerance. The selected range-Doppler pair of the respective spectrum may be referred to as the respective selected range-Doppler pair in the following.

The above mentioned selecting of the pair of frequencies for each spectrum may comprise a determination, for example a searching and finding, of the respective selected range-Doppler pair. Thus, the selected pair of frequencies of the respective spectrum may be the respective selected range-Doppler pair. Hence, the phase information of the selected pair of frequencies of the respective spectrum may be the phase information of the respective selected range-Doppler pair.

In one example, the receiving antennas may comprise a first set of receiving antennas which are part of a first radar unit and a second set of receiving antennas which are part of a second radar unit. The first radar unit and the second radar unit may form a stereo radar system, wherein the first and second radar unit comprise each an aperture. A spacing between the first and the second radar unit may be greater than the greater of the two apertures. The advantage of reducing the sidelobes by means of the first NN may be higher, the sparser the antenna elements of the radar system are arranged to each other. Having the spacing between the first and the second radar unit greater than the greater of the two apertures may be considered as an extreme sparse distribution of the antenna elements of the radar system. Hence, the proposed radar system could be very beneficial in case the radar system is designed in the form of the stereo radar system.

The first set of receiving antennas may be spatially separated from the second set of receiving antennas. The first set of receiving antennas may have a first maximal extension and the second set of receiving antennas may have a second maximal extension. A spacing between the first set and the second set of receiving antennas may be greater than the greater of the first and the second maximal extension, for example more than 10cm.

The first radar unit may comprise a first control unit for controlling a first set of transmitting antennas to send a first set of radar signals dependent on a first set of control signals. The respective transmitting antenna of the first set of transmitting antennas may send the respective radar signal of the first set of radar signals dependent on the respective control signal of the first set of control signals. Similarly, the second radar unit may comprise a second control unit for controlling a respective second set of transmitting antennas to send a second set of radar signals dependent on a second set of control signals. The respective transmitting antenna of the second set of transmitting antennas may send the respective radar signal of the second set of radar signals dependent on the respective control signal of the second set of control signals.

A central radar control unit of the radar system may be configured to synchronize the first set of control signals with the second set of control signals such that the first set of control signals and the second set of control signals comprise a similar course over time simultaneously. In one example, the control signals of the first set of control signals may differ from each other, for example with respect to their phase. In one example, the central radar control unit may be configured to synchronize the first set of control signals with the second set of control signals such that for each control signal of the first set of control signals there is one control signal of the second set of control signals which comprises the same course of the sending frequency over time simultaneously.

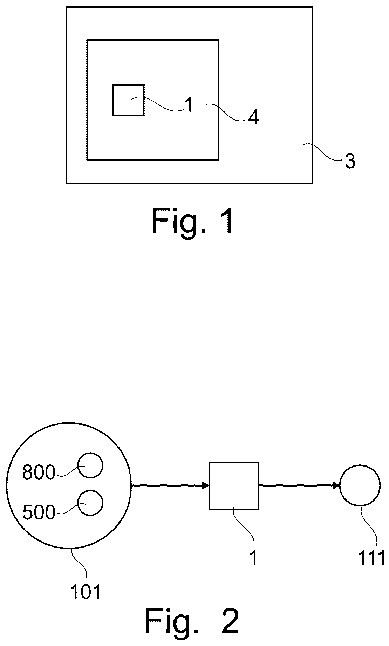

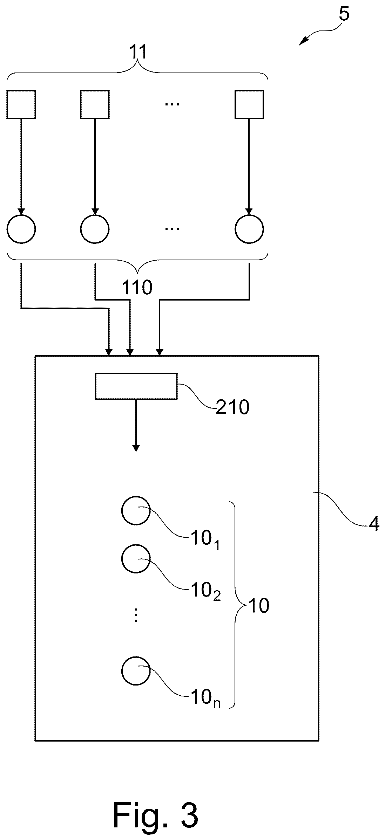

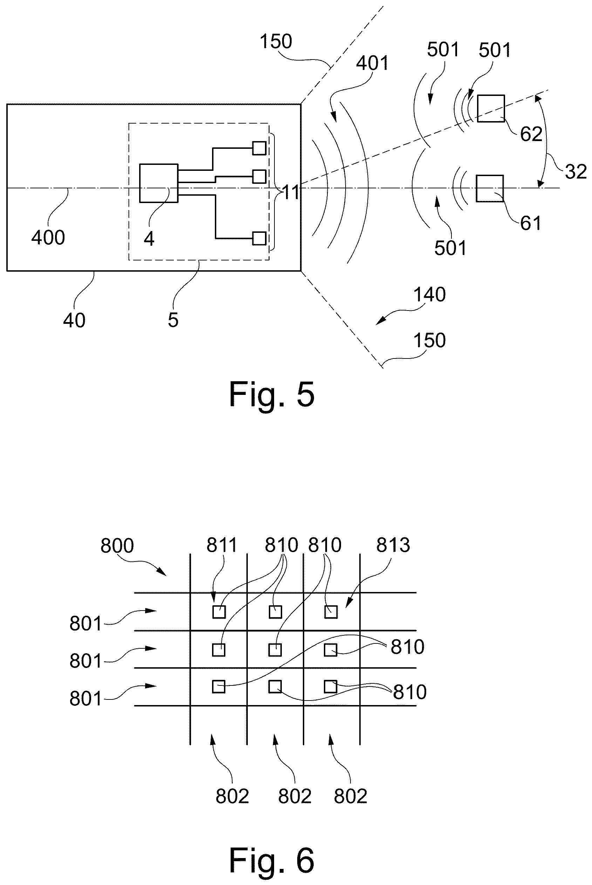

Figure 1 depicts radar system 5 for differentiating objects, for example a first object 61 and a second object 62 shown in Figure 5, in an environment 140 of a vehicle 40 is disclosed. The radar system 5 may comprise an evaluation unit 4 with a trained first neural network 1. The evaluation unit 4 may be configured to generate power spectra 10 dependent on receiving signals 110 shown in Figure 3. The receiving signals 110 may be generated by means of receiving antennas 11. First frequencies of each power spectrum may relate to distances of the objects with respect to the receiving antennas 11. Second frequencies of each power spectrum may relate to relative velocities of the objects with respect to the receiving antennas.

The evaluation unit 4 may be configured to select a pair of frequencies 300 for each power spectrum. The pairs of frequencies 300 of the power spectra may each comprise the same frequency of the first frequencies and the same frequency of the second frequencies. Furthermore, each power spectrum may comprise a phase information of the selected pair of frequencies 300 of the respective power spectrum.

In addition, the evaluation unit 4 may be configured to perform an angle estimation of the objects with respect to the receiving antennas dependent on the selected pairs of frequencies 300. A result of the angle estimation 800 may indicate a differentiation between the objects.

Furthermore, the evaluation unit 4 may be configured to generate first input data 101. The first input data 101 may comprise the result of the angle estimation 800 and the phase information of the selected pairs of frequencies 300.

Furthermore, the evaluation unit 4 may be configured to input the first input data 101 into the first NN 1 and in response receive from the first NN 1 an output 111. The output 111 may comprise a correction of the angle estimation of the objects. In one example, the evaluation unit 4 may write the phase information of the selected pairs of frequencies 300 of each power spectrum into a phase information file 500. In this case, the first input 101 may comprise the phase information file 500, as shown in Figure 2.

The evaluation unit 4 may be configured to generate the power spectra 10 by means of a power spectra module 210 of the evaluation unit 4. Figure 3 exemplarily shows a first power spectrum $10_1$, a second power spectrum $10_2$ and an n-th power spectrum $10_n$ of the power spectra 10. The power spectra 10 may be generated dependent on the receiving signals 110 generated by means of a receiving antennas 11 of the radar system 5.

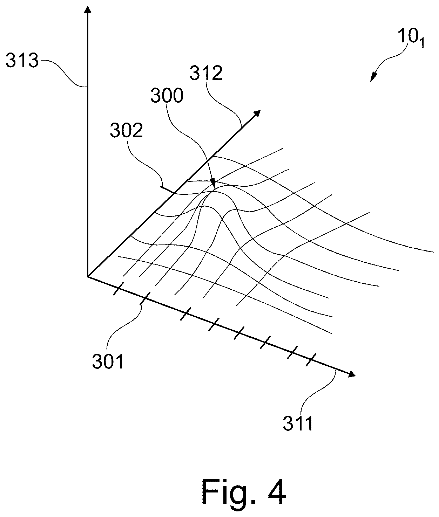

As an example, the first power spectrum $10_1$ is illustrated in Figure 4. Short lines are drawn along a first dimension 311 of the first power spectrum $10_1$, which symbolically represent values of first frequencies of the first power spectrum $10_1$. Further short lines are drawn along a second dimension 312 of the first power spectrum $10_1$, which symbolically represent values of second frequencies of the first power spectrum $10_1$. A third dimension 313 of the first power spectrum $10_1$ may represent an intensity or a power value.

Figure 5 illustrates an application example of the radar system 5 according to which the radar system 5 may be part of the vehicle 40. In one example the radar system 5 may be arranged in the front of the vehicle 40. The environment 140 of the vehicle 40 may be a space in three dimensions between the dashed lines 150.

The radar system 5 may comprise the above mentioned transmitting antennas and the control unit not shown in the figures for transmitting an exemplary set of radar signals 401 dependent on the above mentioned control signals. The exemplary set of radar signals 401 may be an example of the above mentioned radar signals. The respective transmitting antenna may send the respective radar signal of the set of radar signals 401 dependent on the respective control signal.

The receiving antennas 11 may generate the receiving signals 110 in response to receiving a set of reflected radar signals 501. The set of reflected radar signals 501 may result from reflections of the set of radar signals 401 at the objects, for example at the first object 61 and at the second object 62. In one example, a first radar signal of the set of reflected radar signals 501 may result from reflections of the set of radar signals 401 at the first object 61 and a second radar signal of the set of reflected radar signals 501 may result from reflections of the set of radar signals 401 at the second object 62. The evaluation unit 4 may generate the power spectra 10 dependent on the set of reflected radar signals 501.

The control unit may be configured to perform the time-division multiplex method and/or the binary phase modulation for coding the control signals such that the evaluation unit 4 may be enabled to distinguish the set of reflected radar signals 501 from each other on the basis of the coding when processing the receiving signals 110.

The evaluation unit 4, in particular the power spectra module 210, may be designed to generate the power spectra 10 dependent on the control signals and the receiving signals 110 as described above. In one example, the evaluation unit 4, in particular the power spectra module 210, may generate the above mentioned mixed signals and may perform a Fourier transform of the respective mixed signal for obtaining the respective power spectrum of the power spectra 10.

In one example, the evaluation unit 4 may select the pair of frequencies 300 of the first power spectrum $10_1$. The selected pair of frequencies 300 may comprise a frequency 301 of the first frequencies of the first power spectrum $10_1$, in the following referred to as first selected frequency 301, and a frequency 302 of the second frequencies of the first power spectrum $10_1$, in the following referred to as second selected frequency 302. The selected pair of frequencies 300 may form an example of the above mentioned selected range-Doppler pair and may also be referred to as selected range-Doppler pair 300 in the following. In one example, the evaluation unit 4 may select the pair of frequencies 300 as the pair of frequencies of the first power spectrum $10_1$ which comprises the highest power or intensity value.

With respect to the application example of the radar system 5 shown in Figure 5, the first selected frequency 301 may represent a distance of the objects 61, 62 relative to the radar system 5 and the second selected frequency 302 may represent a relative velocity of the objects 61, 62 with respect to the radar system 5. It may be assumed that the distance of the first object 61 to the radar system 5 is similar to the distance of the second object 62 to the radar system 5. The same may be assumed for the relative velocity of the objects 61, 62.

Furthermore, the evaluation unit 4 may process the power spectra 10 and may search the selected range-Doppler pair 300 in each power spectrum of the power spectra 10. The evaluation unit 4 may select the selected range-Doppler pair 300 for each power spectrum. Each selected range-Doppler pair 300 may comprise the first selected frequency 301 and the second selected frequency 302. The respective power spectrum may comprise the phase information of the respective selected range-Doppler pair 300. The evaluation unit 4 may write the phase information of the selected pairs of frequencies 300 of each power spectrum into the phase information file 500.

In one example, as shown in Figure 6, the result of the angle estimation 800 may be in the form of a matrix comprising matrix elements 810. The matrix elements 810 may each be specified by a respective row number of rows 801 of the matrix and a respective column number of columns 802 of the matrix. To each element of the matrix elements 810 a respective subregion of a set of subregions of the environment 140 of the vehicle 40 may be associated. In one example, the subregions of the set of subregions may each comprise that distance to the vehicle 40 which is specified by the first frequency of the selected range-Doppler pair 300, i.e. the first selected frequency 301. Furthermore, the subregions may be located in a respective azimuth angle range of the azimuth angle and a respective elevation angle range of the elevation angle. The azimuth angle may be measured with respect to a longitudinal axis 400 of the vehicle 40. The elevation angle may be measured with respect to a horizontal plane which comprises the longitudinal axis 400. In one example, the column number of the respective element of the matrix elements 810 may specify the respective azimuth angle range in which that subregion is located which is associated to the respective element of the matrix elements 810. In addition, the row number of the respective element of the matrix elements 810 may specify the respective elevation angle range in which that subregion is located which is associated to the respective element of the matrix elements 810.

In one example, the respective element of the matrix elements 810 may comprise a respective probability or intensity value which may indicate a probability that one of the objects may be located in that subregion which is associated to the respective element of the matrix elements 810.

Considering the application example shown in Figure 5, a first element 811 and a third element 813 of the matrix elements 810 may comprise the highest probability values among the matrix elements 810. This may indicate that in a first subregion, which may be associated to the first element 811, the first object 61 is located and that in a third subregion, which may be associated to the third element 813, the second object 62 is located.

In one example, the output 111 may have the same format as the result of the angle estimation 800.

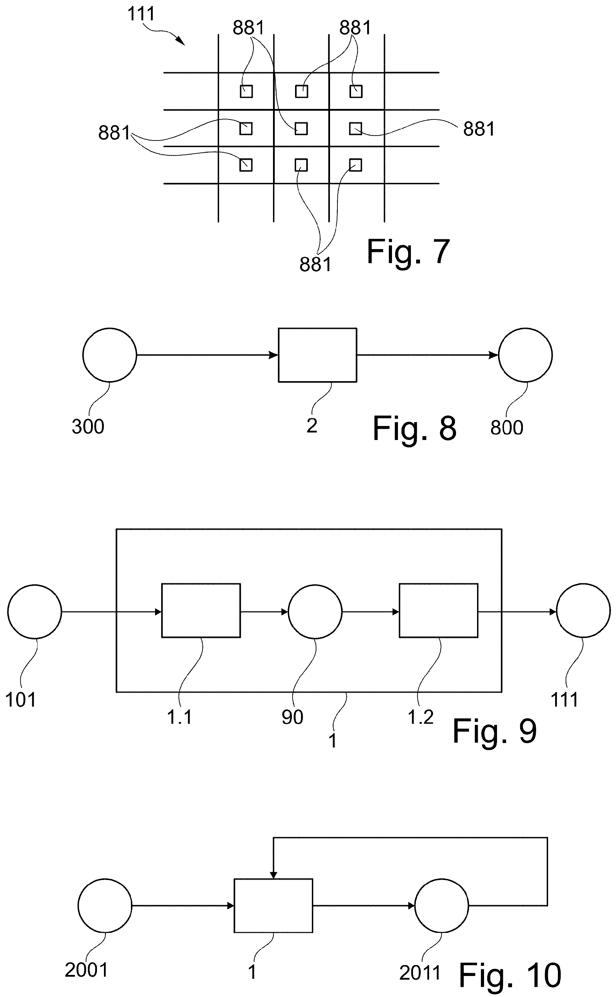

Thus, as shown in Figure 7, the first output 111 may be in the form of a further matrix comprising further matrix elements 881. The further matrix elements 881 may each be specified by a respective row number of rows of the further matrix and a respective column number of columns of the further matrix. To each element of the further matrix elements 881 the above mentioned respective subregion of the set of subregions of the environment 140 of the vehicle 40 may be associated. Hereby, the respective further matrix element of the further matrix elements 881 which is specified by the respective row and column number may be associated to the same subregion as that matrix element of the matrix elements 810 which is specified by the same row and column number of the matrix.

In one example, the respective element of the further matrix elements 881 may comprise a respective further probability value or further intensity value which may be considered as a corrected value of the respective element of the matrix elements 810. Alternatively, the respective element of the further matrix elements 881 may comprise a correction indicator indicating how the respective element of the matrix elements 810 should be corrected. The respective correction indicator may be designed in the form of a value between zero and one, for example.

The evaluation unit 4 may be arranged to compute an update of the result of the angle estimation 800 dependent on the output 111, in case the output 111 may not comprise the corrected values of the matrix elements 810 but the correction indicators.

In one example, the evaluation unit 4 may be arranged to perform the Bartlett method for obtaining the result of the angle estimation 800.

For performing the Bartlett method, the evaluation unit 4 may be configured to form a covariance (or correlation) matrix dependent on the selected range-Doppler pair 300 of each power spectrum. The covariance matrix may capture relationships between the intensity values of the selected range-Doppler pairs 300.

Mathematically, if x may be a vector containing the intensity values of all selected range-Doppler pairs 300, the covariance matrix R is given by:

$$\mathbf{R} = \mathbb{E}\{\mathbf{xx}^H\}$$

where $\mathbb{E}\{\cdot\}$ denotes the expectation (average) and $H$ indicates the Hermitian transpose (conjugate transpose).

Furthermore, the evaluation unit 4 may be configured to apply a steering vector $a(\theta)$. Each element of the steering vector $a(\theta)$ may represent an expected phase shift at a respective virtual antenna element for the set of reflected radar signals 501 arriving from the azimuth angle $\theta$. The control unit may operate the radar system 5 in the MIMO-mode. The MIMO-mode may involve taking into account relative positions of the virtual antenna elements to each other. The relative positions of the virtual antennas may be obtained by performing a convolution of relative distances between the transmitting antennas and the receiving antennas 11. In case the radar system 5 may comprise 4 receiving antennas 11 and 4 transmitting antennas, a number of the virtual antenna elements may be equal to 16.

The evaluation unit 4 may apply the steering vector $a(\theta)$ for computing a power of the reflected radar signals 501 for each direction of the azimuth angle. The evaluation unit 4 may be configured to compute the power of the reflected radar signals 501 dependent on the azimuth angle as follows:

$$P(\theta) = \mathbf{a}(\theta)^H \, \mathbf{R} \mathbf{a}(\theta)$$

where $P(\theta)$ is the power of the reflected radar signals 501 arriving from the azimuth angle $\theta$. For simplicity, the Bartlett method is described only with respect to a varying azimuth angle. The evaluation unit 4 may be configured to the compute the power of the reflected radar signals 501 dependent on the azimuth angle and the elevation angle in an analogous manner. The steering vector may be dependent on the azimuth and the elevation angle in this case.

In case the evaluation unit 4 may perform the angle estimation using the Bartlett method, the evaluation unit 4 may compute a result of the Bartlett method in the form of a discrete result, for example in the form of the result of the angle estimation 800, as shown in Figure 6. In this case, each element of the matrix elements 810 may comprise a respective power value computed on the basis of the Bartlett method indicating the power of the reflected radar signals 501 arriving from the subregion which is associated to the respective element. As each subregion may be located in the respective azimuth angle range and the respective elevation angle range, the result of the angle estimation 800 may correspond to a discrete 2D-angle power spectrum in this case.

The steering vector may be considered as a weighting vector for weighting the covariance matrix. The weighting vector may comprise complex weights as elements of the weighting vector. As the covariance matrix may capture the relationships between the intensity values of the selected pairs 300 of frequencies, applying the multiplication of the covariance matrix with the steering vector may be considered as an example for weighting the intensity information of the respective selected pair of frequencies 300 with the complex weights of the weighting vector for performing the angle estimation.

Figure 8 depicts a variant, according to which the evaluation unit 4 comprises a second NN 2 and may be configured to perform the angle estimation using the second NN 2. The second NN 2 may comprise several hidden layers with neurons and connection weights between the neurons. The connection weights may be in the form of complex weights comprising a real part and an imaginary part. In one example, the second NN 2 may process a second input file comprising the intensity and the phase information of each selected range-Doppler pair 300 for computing the result of the angle estimation 800.

Figure illustrates a variant of the first NN 1 according to which the first NN 1 may comprise a first part 1.1 and a second part 1.2. The first part 1.1 of the first NN 1 may be configured to extract features from the result of the angle estimation 800. In one example, the first part 1.1 may be configured to detect the features in the form of correlations between mainlobes and sidelobes of the of 2D spatial power spectrum, in particular of the 2D-angle spectrum. The first part 1.1 may be arranged to output a feature detection output 90 comprising information about the mainlobes and the sidelobes of the 2D spatial power spectrum. In one example, the feature detection output 90 may comprise a division of the mainlobes and sidelobes into sets of mainlobes and sidelobes, wherein to each set one of the mainlobes and the sidelobes which have the strongest correlation to that mainlobe are associated. The first part 1.1 may be in the form of a convolutional neural network, in one example. The second part 1.2 may be designed to transfer information provided by the feature detection output 90 into the output 111. The second part 1.2 may be in the form of a regulizer. The regulizer may be configured to aggregate the detected features which may be indicated by the feature detection output 90.

In the following an exemplary method for training the first NN 1 may be described. The training may comprise generating training data 2001, as shown in Figure 10. The training data 2001 may comprise input datasets and target datasets. The generating of the training data 2001 may comprise generating the input datasets of the training data 2001 dependent on training receiving signals.

The training receiving signals may be generated by means of training radar signals in a training session using the radar system 5. The training radar signals may comprise sets of training radar signals. The training session may comprise sending the sets of training radar signals by means of the transmitting antennas of the radar system 5. Each set of training radar signals may be sent within a respective time span by means of the transmitting antennas. Thus, the sets of training radar signals may be sent one after the other. During the respective time span of sending the respective set of training radar signals, each transmitting antenna may send a respective training radar signal of the respective set of training radar signals.

The training receiving signals may comprise sets of training receiving signals, wherein the antennas 11 may generate each set of training receiving signals within the respective time span. The antennas 11 may generate the respective set of training receiving signals in response to receiving a respective reflected set of training radar signals. The respective reflected set of training radar signal may result from reflections of the respective sent set of training radar signals at training objects in the environment 140 of the vehicle 40 within the respective time span. In one example the training objects may comprise the first object 61 and the second object 62.

In one example, each input dataset of the training data 2001 may be generated dependent on the respective set of training receiving signals analogously how the first input data 101 is generated dependent on the receiving signals 110. Each input dataset of the training data 2001 may comprise the same format as the first input data 101. Instead of using the receiving signals 110 for generating the first input data 101, the respective set of training receiving signals may be used to compute the respective input dataset of the training data 2001. More specifically, the evaluation unit 4 may generate the above mentioned power spectra and may choose the above mentioned selected pairs of frequencies and may perform the angle estimation for calculating the result of the angle estimation 800 on the basis of the respective set of training receiving signals in order to generate the respective input dataset of the training data 2001.

Furthermore, the training may comprise inputting the input datasets of the training data 2001 into the first NN 1 and in response receiving from the first NN 1 training output datasets 2011. In this case, for each input dataset of the training data 2001 the first NN 1 may generate a respective output dataset of the training output datasets 2011.

Furthermore, the training may comprise calculating a value of a loss function dependent on the training output datasets 2011 and the target datasets of the training data 2001. On one example, the value of the loss function may be computed dependent on a deviation between the training output datasets 2011 and the target datasets of the training data 2001. For example, the value of the loss function may be computed dependent on a sum of squares of differences, wherein each difference may be the difference between the respective output dataset of the training output datasets 2011 and the respective target dataset of the training data 2001.

The training output datasets 2011 and the target datasets of the training data 2001 may each comprise the same format as the first output 111. In one example, probability or intensity values of matrix elements of the respective target dataset of the training data 2001 may be determined manually. This may involve documenting relative positions of the training objects with respect to the radar system 5 in the respective time span and transferring information about these relative positions into the respective target dataset. In this case, the probability values of the matrix elements of the respective target dataset of the training data 2001 may either have the value zero or one.

Alternatively, the probability values of the matrix elements of the respective target dataset of the training data 2001 may be determined using a training radar system comprising a higher aperture than the radar system 5. In this case, for computing the respective target dataset of the training data 2001, a respective training 2D spatial power spectrum, in particular a respective 2D-angle spectrum, may be computed similarly like the above mentioned 2D spatial power spectrum or 2D-angle spectrum dependent on a respective set of further training receiving signals generated by means of the training radar system. The training radar system may generate the respective set of further training receiving signals during the same time span and in a same traffic situation of the vehicle 40 as the radar system 5 may generate the respective set of training receiving signals. To realize this, the training radar system may be mounted at the vehicle 40 in addition to the radar system 5. The training radar system may send a respective set of further training radar signals during the same respective time span as the radar system 5 may send the respective set of training radar signals. Receiving antennas of the training radar system may generate the respective set of further training receiving signals in response to receiving a respective reflected set of further training radar signals during the respective time span. The respective reflected set of further training radar signals may result from reflections of the respective set of further training radar signals at the training objects.

Based on the respective training 2D spatial power spectrum the respective target dataset of the training data 2001 may be computed by converting intensity values of the respective training 2D spatial power spectrum into probability or intensity values of the matrix elements of the respective target dataset of the training data 2001. In one example, the training 2D spatial power spectra may comprise a higher resolution than the 2D spatial power spectra. In this case, intensity values of the training 2D spatial power spectrum may be projected to a lower resolution such that the target datasets may comprise the same format as the training output datasets 2011. As the aperture of the training radar system is greater than the aperture of the radar system 5, the training 2D spatial power spectra may comprise a higher accuracy than the 2D spatial power spectra. Thus by training the first NN 1, a difference of information provided by the training 2D spatial power spectra and the 2D spatial power spectra may be learned by the first NN 1. The difference of information may involve the above mentioned correlation between the mainlobes and the sidelobes.

The training of the first NN 1 may comprise adapting values of parameters of the first NN 1 dependent on the value of the loss function. The parameters of the first NN 1 may comprise connection weights between neurons of the first NN 1 or parameters of activation functions or parameters of pooling functions of the first NN 1 in case the first NN 1 is a CNN. An adapting of the values of the parameters of the first NN 1 to the training data 2001 may be performed using machine-learning techniques such as backpropagation or further learning methods. After the values of the parameters are adapted to the training data 2001, the first NN 1 may be in a trained state, i.e. trained.

It is understood that one or more of the aforementioned examples may be combined as long as the combined examples are not mutually exclusive.

## Claims

1. Radar system (5) for differentiating objects (61, 62) in an environment (140) of a vehicle (40), the radar system (5) comprising an evaluation unit (4) with a trained first neural network (1), wherein the evaluation unit (4) is configured to:

   - generate power spectra (10) dependent on receiving signals (110), the receiving signals (110) being generated by means of receiving antennas (11), wherein first frequencies of each power spectrum relate to distances of the objects (61, 62) with respect to the receiving antennas (11) and second frequencies of each power spectrum relate to relative velocities of the objects (61, 62) with respect to the receiving antennas (11),
   - select a pair of frequencies for each power spectrum, wherein the pairs of frequencies of the power spectra (10) each comprise the same frequency of the first frequencies and the same frequency of the second frequencies, wherein each power spectrum comprises a phase information of the selected pair of frequencies of the respective power spectrum,

   - perform an angle estimation of the objects (61, 62) with respect to the receiving antennas (11) dependent on the selected pairs of frequencies, a result of the angle estimation (800) indicating a differentiation between the objects (61, 62),
   - generate first input data (101), the first input data (101) comprising the result of the angle estimation (800) and the phase information of the selected pairs of frequencies,
   - input the first input data (101) into the first neural network (1) and in response receive from the first neural network (1) an output (111), the output (111) comprising a correction of the angle estimation of the objects (61, 62).

2. The radar system (5) according to claim 1, wherein each power spectrum comprises an intensity information of the selected pair of frequencies of the respective power spectrum and the first input data (101) comprises the intensity information of the selected pairs of frequencies.

3. The radar system (5) according to claim 2, wherein the first input data (101) comprises a respective complex number, the respective complex number representing the intensity information and the phase information of the respective selected pair of frequencies.

4. The radar system (5) according to one of the previous claims, wherein the evaluation unit (4) is configured to

   - weight the phase information of the respective selected pair of frequencies using a respective complex weight and/or to weight an intensity information of the respective selected pair of frequencies provided by the respective power spectrum using the respective weight, the complex weights comprising a real part and an imaginary part,
   - perform the angle estimation of the objects (61, 62) dependent on the weighted phase information and/or the weighted intensity information of the selected pairs of frequencies.

5. The radar system (5) according to claim 4, wherein the evaluation unit (4) is configured to perform the Bartlett method for performing the angle estimation, wherein the complex weights represent weights of the Bartlett method.

6. The radar system (5) according to claim 4 or 5, wherein the evaluation unit (4) comprises a third trained neural network, wherein the third neural network is configured to determine the complex weights dependent on an information about a configuration of an antenna array comprising the receiving antennas (11).

7. The radar system (5) according to claim 4 or 6, wherein the evaluation unit (4) comprises a second neural network (2), wherein the complex weights are designed in the form of connection weights between neurons of several hidden layers of the second neural network (2) and the second neural network (2) is configured to perform the angle estimation dependent on the selected pairs of frequencies and the connection weights.

8. The radar system (5) according to claim 7, wherein the evaluation unit (4) is configured to generate second input data, wherein for the selected pairs of frequencies the second input data comprises a respective complex number, the respective complex number representing the intensity information and the phase information of the respective selected pair of frequencies, and the second neural network is designed to perform the angle estimation dependent on the second input data.

9. The radar system (5) according to any of the previous claims, wherein the receiving antennas (11) comprise a first set of receiving antennas which are part of a first radar unit and a second set of receiving antennas which are part of a second radar unit, the first radar unit and the second radar unit forming a stereo radar system, wherein the first and second radar unit comprise each an aperture and a spacing between the first and the second radar unit is greater than the greater of the two apertures.

10. The vehicle (40) comprising a radar system (5) according to any of the previous claims.

11. Method for operating a radar system (5) for differentiating objects (61, 62) in an environment (140) of a vehicle (40), the radar system (5) comprising an evaluation unit (4) with a trained first neural network (1), the method comprising:

   - generating power spectra (10) dependent on receiving signals (110), the receiving signals (110) being generated by means of receiving antennas (11), wherein first frequencies of each power spectrum relate to distances of the objects (61, 62) with respect to the receiving antennas (11) and second frequencies of each power spectrum relate to relative velocities of the objects (61, 62) with respect to the receiving antennas (11),
   - selecting a pair of frequencies for each power spectrum, wherein the pairs of frequencies of the power spectra (10) each comprise the same frequency of the first frequencies and the same frequency of the second frequencies, wherein each power spectrum comprises a phase information of the selected pair of frequencies of the respective power spectrum,
   - performing an angle estimation of the objects (61, 62) with respect to the receiving antennas (11) dependent on the selected pairs of frequencies, a result of the angle estimation (800) indicating a differentiation between the objects (61, 62),
   - generating first input data (101), the first input data (101) comprising the result of the angle estimation (800) and the phase information of the selected pairs of frequencies,
   - inputting the first input data (101) into the first neural network (1) and in response receive from the first neural network (1) an output (111), the output (111) comprising a correction of the angle estimation of the objects (61, 62).

12. A computer program comprising machine executable instructions for execution by a computational system, wherein execution of the machine executable instructions causes the computational system to perform the method of claim 11.

Fig. 1

Fig. 2

Fig. 3

Fig. 4

## Fig. 5

## Fig. 6

111

881          881

881                          881

881

# Fig. 7

300          2     Fig. 8     800

101          1.1     90     1.2     111

1

# Fig. 9

2001          1     2011     # Fig. 10

## EUROPEAN SEARCH REPORT

**Application Number**

EP 25 21 0598

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUCHS JONAS ET AL: "Single-Snapshot Direction-of-Arrival Estimation of Multiple Targets using a Multi-Layer Perceptron", 2019 IEEE MTT-S INTERNATIONAL CONFERENCE ON MICROWAVES FOR INTELLIGENT MOBILITY (ICMIM), IEEE, 15 April 2019 (2019-04-15), pages 1-4, XP033556741, DOI: 10.1109/ICMIM.2019.8726554 [retrieved on 2019-05-30] * the whole document * | 1-12 | INV. G01S7/35 G01S7/41 G01S13/34 G01S13/42 G01S13/58 G01S13/931 |
| A | CN 117 347 965 A (UNIV XIDIAN) 5 January 2024 (2024-01-05) * paragraph [0061] - paragraph [0063] * | 1,11,12 | |
| A | WO 2020/072041 A1 (OCULII CORP [US]) 9 April 2020 (2020-04-09) * figure 4B * * paragraphs [0025] - [0032], [0056] * | 9 | |

-----

-----

-----

**TECHNICAL FIELDS SEARCHED (IPC)**

G01S

The present search report has been drawn up for all claims

| Place of search | Date of completion of the search | Examiner |
|---|---|---|
| Munich | 4 March 2026 | Knoll, Bernhard |

## ANNEX TO THE EUROPEAN SEARCH REPORT
## ON EUROPEAN PATENT APPLICATION NO.

EP 25 21 0598

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | Publication date | Patent family member(s) | | Publication date |
|---|---|---|---|---|---|
| CN 117347965 | A | 05-01-2024 | NONE | | |
| WO 2020072041 | A1 | 09-04-2020 | US | 10359512 B1 | 23-07-2019 |
| | | | US | 10386462 B1 | 20-08-2019 |
| | | | WO | 2020072041 A1 | 09-04-2020 |

EPO FORM P0459

For more details about this annex : see Official Journal of the European Patent Office, No. 12/82

**REFERENCES CITED IN THE DESCRIPTION**

**Patent documents cited in the description**

- DE 102020201025 A1